**Europäisches Patentamt**

**European Patent Office**

**Office européen des brevets**

(19)

(11) Veröffentlichungsnummer : **0 371 211 B1**

(12) ## EUROPÄISCHE PATENTSCHRIFT

(45) Veröffentlichungstag der Patentschrift :
01.07.92 Patentblatt 92/27

(51) Int. Cl.⁵ : **C04B 35/00, B01D 1/18**

(21) Anmeldenummer : **89116261.2**

(22) Anmeldetag : **02.09.89**

(54) **Verfahren zur Herstellung homogener, feinteiliger Keramikpulver.**

(30) Priorität : 30.11.88 DE 3840316

(43) Veröffentlichungstag der Anmeldung :
06.06.90 Patentblatt 90/23

(45) Bekanntmachung des Hinweises auf die
Patenterteilung :
01.07.92 Patentblatt 92/27

(84) Benannte Vertragsstaaten :
AT BE FR GB

(56) Entgegenhaltungen :
EP-A- 0 071 040
EP-A- 0 241 647
FR-A- 2 164 008

(73) Patentinhaber :
**KERNFORSCHUNGSZENTRUM KARLSRUHE GMBH**
**Weberstrasse 5 Postfach 3640**
**W-7500 Karlsruhe 1 (DE)**

(72) Erfinder : **Vollath, Dieter, Dr.**
**Primelweg 3**
**W-7513 Stutensee-Friedrichstal (DE)**
Erfinder : **Dörzapf, Bernhard**
**Rosenstrasse 15**
**W-6729 Kuhardt (DE)**

## Beschreibung

Die Erfindung betrifft ein Verfahren zur Herstellung homogener, feinteiliger Keramikpulver nach dem Oberbegriff des Hauptanspruches.

Mit dem erfindungsgemäßen Verfahren sollen insbesondere Oxidkeramikpulver auf der Basis der Oxide der Metalle Yttrium und Magnesium sowie Aluminium und Zirkonium hergestellt werden.

Homogene, feinteilige Keramikpulver können prinzipiell auf vier verschiedenen Wegen hergestellt werden:

a) durch mechanisches Mahlen.

Das Mahlen wird vorzugsweise zur Erzeugung feinteiliger, homogener Metallpulver angewandt, wo die typische Mahldauer etwa 6 Stunden beträgt. Für Keramikpulver ist das Mahlen weniger geeignet, da die notwendige Mahldauer bis auf 1 bis 2 Tage ansteigen kann und homogene Produkte nur schwer zu erhalten sind.

Das Mahlen erfordert die vorbereitenden Verfahrensschritte (i) Herstellung einer Metallsalzlösung (ii), Fällung der Metalle z. B. in Form der Hydroxide sowie (iii) Trocknen und Kalzinieren des Niederschlags.

b) durch Hydroxidfällung

Bei der Hydroxidfällung wird eine Lösung verschiedener Metallverbindungen einen Überschuß einer Base eingebracht, wobei die Metallhydroxide ausfallen, die weiterverarbeitet werden. Der prinzipielle Nachteil dieses Verfahrens besteht darin, daß die verschiedenen Metalle bei einem verschiedenen pH-Wert ausfallen, weshalb nach dieser Methode homogene Pulver nur ausnahmsweise und auch dann nur bei optimaler Lösungszusammensetzung erhalten werden.

c) durch Hydrolyse metallorganischer Verbindungen

Bei diesem Verfahren werden metallorganische Verbindungen, z. B. Alkoholate, in einem Überschuß von Wasser hydrolysiert. Analog zur Hydroxidfällung besteht der prinzipielle Nachteil darin, daß die Hydrolysierungsgeschwindigkeit je nach dem verwendeten Metall sehr unterschiedlich ist, weshalb sich hierdurch nur schwer homogene Keramikpulver erzielen lassen.

d) Sprühkalzination

Bei der Sprühkalzination wird eine Lösung oder Suspension von Metallerbindungen in einer geheizten Vorrichtung versprüht, wobei die Verdampfung des Lösungsmittels und die Trocknung, Kalzinierung und chemische Umwandlung der Rückstandspartikel in einem Schritt erfolgt. Ein geeignetes Verfahren und die dafür verwendbare Vorrichtung sind in der Patentanmeldung mit der Anmeldenummer P 37 19 825.4 beschrieben.

Die Sprühkalzination liefert sehr homogene, teilweise amorphe Pulver mit einem Wasseranteil von 5 bis 7 %.

Aufgabe der Erfindung ist es, ein Verfahren zur Herstellung feinteiliger und homogener Keramikpulver, die kristallin und praktisch wasserfrei sind, anzugeben. Die Eigenschaften dieser Pulver sollen von der Art der eingesetzten Metallionen unabhängig sein. Bei dem Verfahren sollen die Verdampfung des Lösungsoder Suspensionsmittels, die Trocknung und Kalzinierung der entstehenden Rückstandspartikel und deren chemischen Umwandlung zur gewünschten Keramik in einem einzigen Verfahrensschritt ablaufen.

Die Aufgabe wird erfindungsgemäß dadurch gelöst, daß zum Versprühen der Lösung oder der Suspension ein brennbares Gas verwendet wird, das im Reaktor verbrannt wird.

Als brennbares Gas wird vorzugsweise Wasserstoff verwendet.

Mit dem erfindungsgemäßen Verfahren gelingt es, kristalline und praktisch wasserfreie Keramikpulver herzustellen.

Diese Keramikpulver weisen eine kohärente Partikelgröße im Bereich von 10 bis 100 nm auf.

Beim erfindungsgemäßen Verfahren bilden sich Tröpfchen im Bereich von 3 bis 15 µm, deren Flüssigkeitsanteil verdampft und deren Rückstandspartikel kalziniert und chemisch umgewandelt werden. Die entstehenden getrockneten Teilchen haben Größen zwischen 0,1 und 3 µm.

Die Verdampfung, die Kalzinierung und die chemische Umwandlung vollziehen sich in so kurzer Zeit, daß Segregationen nicht auftreten können und somit ein sehr homogenes Pulver mit der angegebenen Teilchengrößenverteilung erzeugt werden kann.

Durch die Versprühung der Lösung in der Flamme wird die meßbare Flammentemperatur beträchtlich gesenkt.

Eine weitere Temperaturreduzierung im Reaktor kann gegebenenfalls erreicht werden, wenn am Ende der sichtbaren Flamme kalte Luft in den Reaktor eingespeist wird. Hierdurch wird die thermische Beanspruchung des Reaktors weiter vermindert.

Der für die Verbrennung notwendige Sauerstoff wird vorzugsweise durch Luft als Trägergas zugeführt. Das Trägergas strömt durch eine Fritte in den Reaktor, die sich im Bereich der Düse für das Sprühgas und die Lösung oder Suspension befindet.

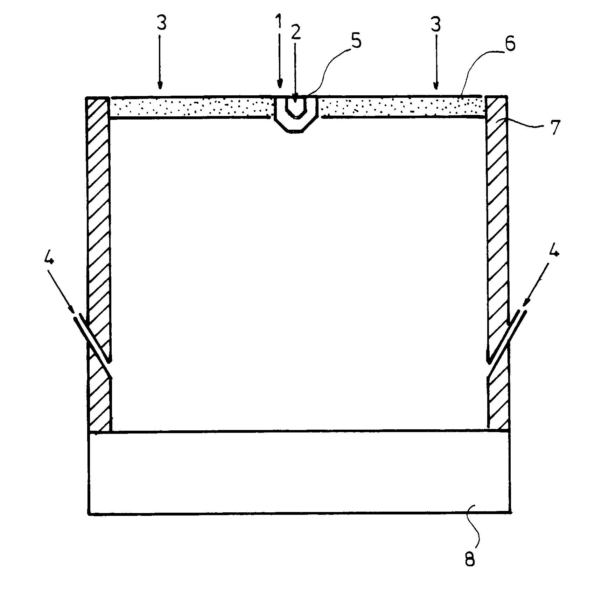

In der Figur ist ein geeigneter Reaktor zur Durchführung des Verfahrens schematisch dargestellt.

Der Reaktor wird durch ein Rohr gebildet, dessen Wände 7 wärmeisoliert ausgeführt sind und dessen Unterteil 8 als Pulverabscheider ausgebildet ist. Als Pulverabscheider sind beispielsweise ein Zyklon, eine Filterkerze oder ein Elektrofilter verwendbar.

Die Lösung oder Suspension 2, durch deren Bestandteil das Keramikpulver gebildet wird, wird im Innern einer doppelten, koaxialen Düse 5 eingeführt. Die Lösung oder Suspension wird durch ein Sprühgas 1 zerstäubt, das durch den äußeren Teil der Düse 2 eingeleitet wird. Als Sprühgas 1 wird vorzugsweise Wasserstoff verwendet.

Die Duse 5 ist mit einer (nicht gezeichneten) Vorrichtung zur Entzündung des Wasserstoffs versehen.

Der für die Verbrennung notwendige Sauerstoff wird dem Reaktor mit dem Trägergas 3, vorzugsweise Luft, durch eine Fritte 6 zugeführt. Die Arbeitstemperatur der Vorrichtung kann durch Einblasen von Luft 4 am Ende des sichtbaren Flammenkegels wirksam vermindert werden.

Die meßbare Flammentemperatur - und damit die Reaktionstemperatur - läßt sich einfach durch die Sprühgeschwindigkeit regeln.

Die Erfindung wird im folgenden durch zwei Durchführungsbeispiele näher erläutert.

Beispiel 1

Aus Zirkonylchlorid $ZrOCl_2 \cdot 8H_2O$ (78 Mol-%), Yttriumchlorid $YCl_3 \cdot 6H_2O$ (2 Mol-%) und Aluminiumhydroxid $AlCl_3 \cdot 6H_2O$ (20 Mol-%) wird eine insgesamt 0,5 bis 1 molare wäßrige Lösung hergestellt.

Die Lösung wird in dem oben beschriebenen Reaktor versprüht. Als Sprühgas wird Wasserstoff (5 bar, 1 m³/h) verwendet. Als

Trägergas dient auf 350° C vorgewärmte Luft (5 m³/h). Die Sprühgeschwindigkeit der Lösung beträgt ca. 1 l/h.

Der Wasserstoff wird mit einem Hochspannnungsfunken entzündet. Die Verfahrensschritte Trocknen, Kalzinieren und chemische Umwandlung der Chloride zu Oxiden finden in der Flamme bei einer meßbaren Flammentemperatur von 1200° bis 1300° C statt.

Man erhält ein homogenes, feinteiliges, nahezu wasserfreies und kristallisiertes Pulver aus Zr-Al-Y-Oxid-Keramik, bei der die Metalle im Molverhältnis 78:20:2 vorliegen.

Beispiel 2

Aus den Nitraten von Magnesium und Aluminium (Molverhältnis 1:2) wird eine Lösung hergestellt, die insgesamt 0,5 bis 1 Mol/l der Salze enthält.

Diese Lösung wird unter demselben Verfahrensbedingungen wie in Beispiel 1 (Trägergas Wasserstoff, 5 bar, 1 m³/h) mit einer Sprühgasgeschwindigkeit von ca. 1 l/h versprüht.

Als Trägergas wird vorgeheizte Luft (Temperatur im Bereich zwischen 300° C und 600° C) verwendet.

Der Wasserstoff wird mit einem Hochspannungsfunken gezündet.

Man erhält den Spinell $MgAl_2O_4$ als homogenes, kristallines, nahezu wasserfreies Pulver.

In beiden Endprodukten konnten Inhomogenitäten bzw. Segregationen nicht festgestellt werden.

**Patentansprüche**

1. Verfahren zur Herstellung homogener, feinteiliger Keramikpulver, bei dem
a) eine Lösung oder eine Suspension von Stoffen, aus denen die Bestandteile des Keramikpulvers gebildet werden, hergestellt wird,
b) die Lösung oder Suspension durch eine Düse in einem beheizbaren Reaktor versprüht wird, wobei
c) im Reaktor das Lösungs- oder Suspensionsmittel verdampft und feste Rückstandspartikel gebildet werden, die getrocknet und durch eine Zersetzungs- oder eine andere chemische Reaktion in die Bestandteile des Keramikpulvers überführt werden,
dadurch gekennzeichnet, daß zum Versprühen der Lösung oder der Suspension ein brennbares Gas verwendet wird, das im Reaktor verbrannt wird.

2. Verfahren nach Anspruch 1, dadurch gekennzeichnet, daß als brennbares Gas Wasserstoff verwendet wird.

## Claims

1. Process for the production of homogeneous, finely divided ceramic powders, wherein

a) a solution or a suspension of substances is produced, from which substances the constituent ingredients of the ceramic powder are formed,

b) the solution or suspension is sprayed through a nozzle in a heatable reactor,

c) the solvent or dispersing agent being evaporated in the reactor, and solid residue particles being formed, which are dried and converted into the constituent ingredients of the ceramic powder by means of a decomposition reaction or another chemical reaction,

characterised in that a combustible gas is used for spraying the solution or the suspension, which gas is burned in the reactor.

2. Process according to claim 1, characterised in that hydrogen is used as the combustible gas.

## Revendications

1. Procédé pour la préparation de poudres céramiques homogènes finement divisées, dans lequel

a) on prépare une solution ou une suspension de substances, à partir desquelles seront formés les composants de la poudre céramique,

b) on pulvérise la solution ou suspension par un injecteur dans un réacteur chauffable, ce par quoi,

c) dans le réacteur le solvant ou agent de mise en suspension est évaporé et il se forme des particules solides de résidu, qui sont séchées et converties, par une réaction de décomposition ou une autre réaction chimique, en les composants de la poudre céramique,

caractérisé en ce que, pour la pulvérisation de la solution ou de la suspension, on utilise un gaz combustible qui est brûlé dans le réacteur.

2. Procédé selon la revendication 1, caractérisé en ce que, en tant que gaz combustible, on utilise l'hydrogène.